# EUROPÄISCHE PATENTANMELDUNG

(11) **EP 0 997 369 A2**
(43) Veröffentlichungstag der Anmeldung: **03.05.2000**
(21) Anmeldenummer: 99120034.6
(22) Anmeldetag: 18.10.1999
(51) Int. Cl.: B62D 1/19

(54) **Teleskopierbare Lenkspindel mit einem Deformationskörper**

(30) Priorität: 26.10.1998 DE 19849262
(71) Anmelder: Mannesmann VDO Aktiengesellschaft, 60388 Frankfurt am Main (DE)
(72) Erfinder: Blex, Waldemar, 44536 Lünen-Brombauer (DE)
(74) Vertreter: Rassler, Andrea, Dipl.-Phys.

(57) **Zusammenfassung**

Bei einer im Crashfall teleskopierbaren Lenkspindel (1) ist ein äußeres Mantelrohr (6) mit einem Stutzen (7) mittels eines Scherkörpers (10) verbunden. Dieser zweiteilige Scherkörper (10) hat eine gegenüber seinen äußeren Abmessungen verkleinerte Scherfläche, die durch einen seine beiden Abschnitte (11, 12) verbindenden Vorsprung bestimmt ist. Der Scherkörper (10) kann daher relativ große axiale Kräfte, beispielsweise zu Montagezwecken, aufnehmen und ermöglicht dennoch weitgehend beliebig einstellbare, maximal zulässige Scherkräfte, die zugleich mit hoher Genauigkeit reproduzierbar sind.

## Beschreibung

Die Erfindung betrifft eine teleskopierbare Lenkspindel, insbesondere für ein Kraftfahrzeug, mit einem äußeren Mantelrohr und mit einem Stutzen, wobei das Mantelrohr und der Stutzen mittels eines Deformationskörpers verbunden sind.

Solche Lenkspindeln werden in heutigen Kraftfahrzeugen häufig eingesetzt und sind damit bekannt. Der Deformationskörper verhindert hierbei eine Rückwirkung der bei einem Unfall auf das Fahrzeug wirkenden Verformungskräfte auf den Fahrer. Insbesondere wird eine axiale Verschiebung der Lenkspindel in den Fahrgastraum verhindert. Bei manchen Ausführungsformen wird der Deformationskörper auch dazu verwendet, um bei einem Aufprall des Fahrers auf das Lenkrad das Verletzungsrisiko möglichst gering zu halten.

Der Deformationskörper ist hierzu beispielsweise mit einer Sollbruch- oder Sollrissstelle versehen, die das teleskopische Einschieben des Stutzens in das äußere Mantelrohr ermöglicht, sobald eine vorbestimmte maximale Kraft überschritten wird. Dabei sind der Stutzen und das äußere Mantelrohr im normalen Fahrbetrieb fest miteinander verbunden. Das Deformationselement ist hierzu nach einer bekannten Ausgestaltung als Abreißlasche ausgeführt, wobei der Stutzen bei übermäßiger Krafteinwirkung nach außen aufgerissen wird.

Nachteilig wirkt sich bei derart ausgeführten Deformationskörpern aus, dass eine Abstimmung auf die gewünschten Deformationskräfte mit großem Aufwand verbunden ist und hierzu zumeist eine Neukonstruktion der Lenkspindel erforderlich ist. Dabei muss ein versehentliches Aufreißen des Deformationskörpers im normalen Fahrbetrieb sicher vermieden werden und zugleich oberhalb des zulässigen Wertes eine zuverlässige Trennung von Stutzen und Mantelrohr sichergestellt werden. Zugleich wirken sich bereits geringe Fertigungstoleranzen auf die Betriebssicherheit der Lenksäule nachteilig aus. Deshalb haben viele in der Praxis eingesetzte Lenkspindeln einen Deformationskörper, bei dem eine Deformierung erst bei einer relativ großen Fremdkrafteinwirkung erfolgt und somit der Fahrer einer hohen Belastung ausgesetzt ist.

Der Erfindung liegt das Problem zugrunde, eine Lenkspindel der eingangs genannten Art so zu gestalten, dass diese im normalen Fahrbetrieb eine zuverlässige Übertragung der Lenkkräfte ermöglicht und zugleich oberhalb eines frei einstellbaren Wertes eine Übertragung von äußeren Kräften auf den Fahrer verhindert. Dabei sollen zugleich Fertigungstoleranzen keine oder nur unerhebliche Auswirkungen auf die Betriebssicherheit haben und der Montageprozess sowie die Anpassung an verschiedene Anwendungszwecke erleichtert sein.

Dieses Problem wird erfindungsgemäß dadurch gelöst, daß der Deformationskörper einen Scherkörper aufweist, der eine von seiner Querschnittsfläche abweichende Scherfläche aufweist. Hierdurch ist es möglich, das Mantelrohr und den Stutzen mittels des Scherkörpers zuverlässig zu verbinden und zugleich durch Anpassung der Scherfläche eine gewünschte, maximal übertragbare Kraft festzulegen. Dabei kann der Scherkörper insbesondere Abmessungen aufweisen, die im Montageprozess eine einfache und fehlerfreie Verbindung ermöglichen. Dadurch können beispielsweise auch Fertigungsverfahren eingesetzt werden, die vergleichsweise hohe Toleranzwerte aufweisen oder eine spezielle Formgebung des Scherkörpers erfordern. Die Anpassung der gewünschten Scherkräfte gestattet eine universelle Verwendung des Scherkörpers bei unterschiedlichen Fahrzeugen.

Eine besonders vorteilhafte Weiterbildung der Erfindung ist dadurch gegeben, dass der Scherkörper in seiner eingebauten Position im Bereich zwischen dem Mantelrohr und dem Stutzen eine gegenüber der übrigen Querschnittsfläche verkleinerte Scherfläche aufweist. Hierdurch kann der Scherkörper eine entsprechend der zu übertragenden Lenkkräfte ausgeführte Querschnittsfläche aufweisen und hierzu beispielsweise auch mit einem Gewinde oder einem speziellen Profil versehen sein, wobei der Scherkörper eine davon unabhängige und verkleinerte Scherfläche aufweist.

Eine besonders günstige Weiterbildung der Erfindung ist auch dann gegeben, wenn der Scherkörper zwei miteinander formschlüssig verbundene Abschnitte aufweist, die mittels eines die Scherfläche bestimmenden Scherstiftes verbunden sind. Durch die Aufteilung des Scherkörpers in zwei Abschnitte werden die in der Trennebene wirkenden Kräfte ausschließlich von dem Scherstift übertragen. Dabei liegen die beiden Abschnitte unmittelbar gegeneinander und erlauben so in der Ebene quer zur Trennebene eine Übertragung von nahezu unveränderten Druckkräften. Dadurch kann der so ausgeführte Scherkörper auch mit relativ großer Kraft in die Lenksäule eingetrieben werden. Der erste Abschnitt ist dabei mit dem äußeren Formkörper und der zweite Abschnitt mit dem Stutzen verbunden.

Der Scherstift kann dabei beliebig dimensioniert sein, unterschiedliche Materialeigenschaften aufweisen und lösbar oder unlösbar mit den beiden Abschnitten verbunden sein. Eine besonderes zweckmäßige Verbindung ist auch dadurch gegeben, dass der Scherstift eine Presspassung aufweist. Hierdurch können die beiden Abschnitte des Scherkörpers zunächst zu einer Baueinheit zusammengefügt werden, so dass der nachfolgende Fertigungsprozess wesentlich erleichtert wird. Dabei lässt sich zugleich auch eine präzise und zuverlässige Bestimmung der Scherkraft vornehmen und eine fehlerhafte Montage verhindern.

Eine besonders einfache Ausführungsform der Erfindung ist auch dadurch gegeben, dass der Scherkörper einen mit einem Vorsprung versehenen ersten Abschnitt aufweist, welcher in eine entsprechende Ausnehmung eines zweiten Abschnitts eingesetzt ist. Hierdurch kann der Montageprozess weiter vereinfacht werden, indem der Scherkörper aus lediglich zwei Teilen besteht. Dabei können unterschiedliche Ausgestaltungen zur Montageerleichterung vorgesehen sein, wobei beispielsweise die Außenabmessungen auch bei unterschiedlichen Scherflächen einheitlich ausgeführt sind.

Besonders einfach ist die Erfindung dadurch gestaltet, dass der Scherkörper einen nach dem Einsetzen des Scherkörpers in die Lenkspindel entfernbaren Kern aufweist.

Während des Montageprozesses kann der Scherkörper hierzu insbesondere als massives Formteil ausgeführt sein, welches hierdurch eine problemlose Fertigung und die Übertragung hoher Montagekräfte ermöglicht. Nach dem anschließenden Entfernen des Kerns, welcher hierzu beispielsweise zuvor eigens in den Scherkörper eingesetzt wird, ist die Querschnittsfläche auf die gewünschte Scherfläche reduziert. Ausführungsformen, bei denen der Kern des Scherkörpers durch eine beliebige, beispielsweise spanende Bearbeitung, entfernt wird, sind ebenso denkbar wie der Einsatz eines mit abweichenden Materialeigenschaften ausgestatteten Kerns. Der Kern kann auch als Teil eines Werkzeuges ausgeführt und dadurch lediglich während des Montageprozesses in den Scherkörper eingesetzt sein.

Eine besonders effektive Abwandlung der Erfindung ist auch dadurch gegeben, dass der Scherkörper zumindest eine die Querschnittsfläche auf das Maß der Scherfläche verringernde Ausnehmung aufweist. Eine solche Ausnehmung ist leicht anzubringen und ermöglicht so eine schnelle Anpassung an die zulässigen Scherkräfte.

Besonders vorteilhaft ist es auch, wenn der Scherkörper eine im wesentlichen kreisförmige Querschnittsfläche aufweist. Hierdurch können Montagefehler weitgehend ausgeschlossen werden. Zugleich können Kerbwirkungen durch Kanten an dem Scherkörper und die damit verbundenen Auswirkungen auf die zulässige Scherspannung verhindert werden.

Eine besonders gut geeignete Ausführungsform der Erfindung ist auch dadurch gegeben, dass die Lenkspindel mehrere, über den Umfang in etwa gleichmäßig verteilte Scherkörper aufweist. Mögliche Einflüsse durch Biegemomente auf den Scherkörper können hierdurch weitgehend verhindert werden. Dabei können auch mehrere der Scherkörper zu einer Baueinheit zusammengefasst werden oder ein Scherkörper mehrere, über den Umfang verteilte Scherflächen aufweisen.

Günstig ist es hierbei, wenn der Scherkörper aus Stahl hergestellt ist. Die Materialeigenschaften des derart ausgeführten Scherkörpers sind dadurch auch an hohe Belastungen anpassbar. Zugleich ist der Scherkörper gegenüber Temperaturschwankungen sowie Korrosion unempfindlich.

Das äußere Mantelrohr und der Stutzen können formschlüssig ineinander eingesetzt sein, so dass eine relative Drehbewegung zueinander auf ein geringes Maß begrenzt oder vollkommen ausgeschlossen ist. Besonders vorteilhaft ist es jedoch, wenn das äußere Mantelrohr und der Stutzen lediglich mittels des Scherkörpers drehfest verbunden sind. Dadurch wird im Falle einer überhöhten Krafteinwirkung auf die Lenkspindel eine Übertragung axialer und radialer Kräfte verhindert. Die passive Sicherheit des Fahrers wird dadurch wesentlich erhöht.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine perspektivische Ansicht einer Lenkspindel,
- Fig. 2: einen Längsschnitt durch einen oberen Teilbereich der Lenkspindel mit einem Mantelrohr und einem Stutzen,
- Fig. 3: einen Querschnitt durch das Mantelrohr und den Stutzen,
- Fig. 4: einen Scherkörper der Lenkspindel in einer teilweise geschnittenen Seitenansicht,
- Fig. 5: eine andere Ausführung eines erfindungsgemäßen Scherkörpers in einer teilweise geschnittenen Seitenansicht,
- Fig. 6: eine weitere Ausführung eines zweiteiligen Scherkörpers mit einem Scherstift in einer teilweise geschnittenen Seitenansicht,
- Fig. 7: eine einteilige Ausführungsform eines Scherkörpers in einer Seitenansicht.

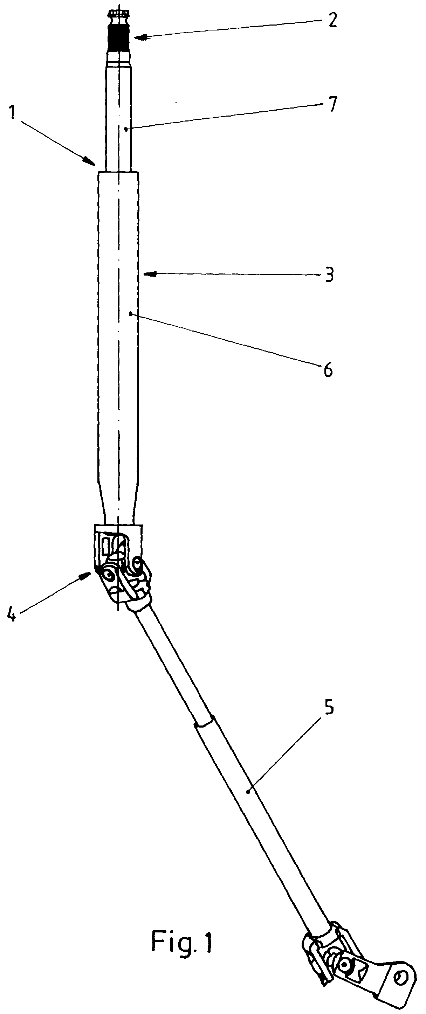

Figur 1 zeigt in einer perspektivischen Ansicht eine zweiteilige Lenkspindel 1 eines Kraftfahrzeugs, deren mit einer Lenkradaufnahme 2 versehenes Oberteil 3 mittels eines Kreuzgelenkes 4 mit einem Unterteil 5 verbunden ist. Das Oberteil 3 der Lenkspindel 1 hat ein Mantelrohr 6, in das ein Stutzen 7 im Crashfall teleskopisch einschiebbar ist. Eine von außen auf die Lenkspindel 1 einwirkende, den zulässigen Wert übersteigende Kraft wird daher nicht auf die Lenkradaufnahme 2 und somit auf den Fahrer eines mit der Lenkspindel 1 ausgestatteten Fahrzeuges übertragen, sondern bewirkt das Einschieben des Stutzens 7 in das Mantelrohr 6.

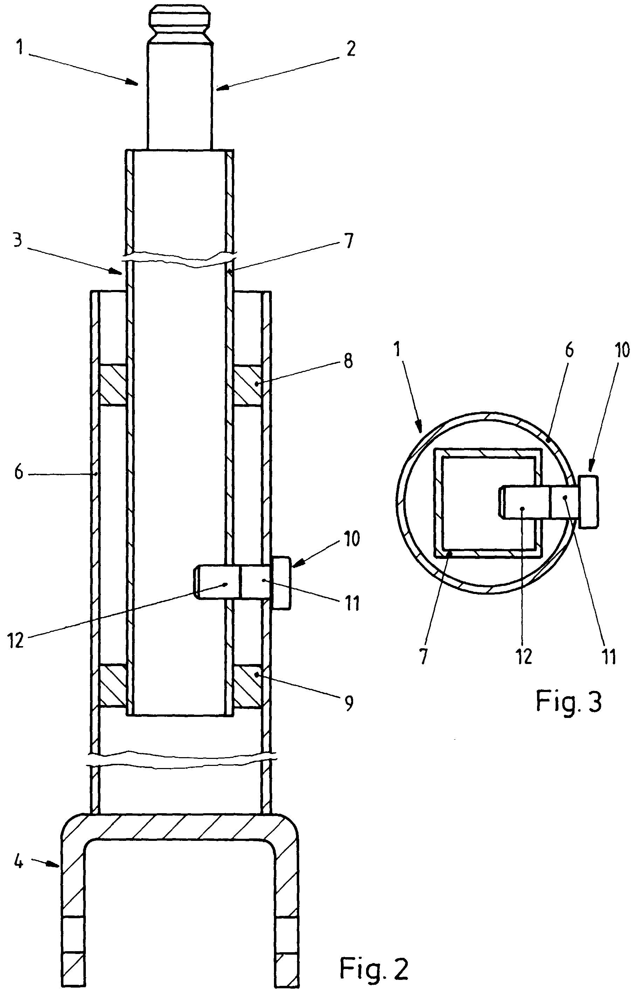

Figur 2 zeigt eine entlang seiner Längsachse geschnittene und verkürzte Darstellung des Oberteiles 3 der Lenkspindel 1. Zu erkennen ist der mit der Lenkradaufnahme 2 verbundene Stutzen 7, welcher in das mit dem Kreuzgelenk 4 verbundene Mantelrohr 6 teilweise eingeschoben ist. Je eine Führung 8, 9 bestimmt den Abstand zwischen dem Mantelrohr 6 und dem Stutzen 7, so dass ein Verklemmen des Stutzens 7 in dem Mantelrohr 6 auch bei einer Biegebelastung ausgeschlossen werden kann. Im dargestellten Betriebszustand verhindert ein sowohl durch die Wandung des Mantelrohres 6 als auch durch den Stutzen 7 hindurchgeführter Scherkörper 10 deren unbeabsichtigte Relativbewegung. Bei einer über einer höchstzulässigen, äußeren Belastung liegenden Krafteinwirkung auf die Lenkspindel 1 wird der Scherkörper 10 zwischen einem ersten, gegen das Mantelrohr 6 anliegenden Abschnitt 11 und einem zweiten, in den Stutzen 7 eingesetzten Abschnitt 12 getrennt, so dass der Stutzen 7 und das Mantelrohr 6 teleskopisch ineinander geschoben werden können.

Einen Querschnitt durch das Mantelrohr 6 und den Stutzen 7 zeigt Figur 3. Der Scherkörper 10 ist derart in die Lenkspindel 1 eingesetzt, dass der erste Abschnitt 11 des Scherkörpers 10 durch das Mantelrohr 6 hindurch ragt und der zweite Abschnitt 12 des Scherkörpers 10 in den ebenfalls als Hohlkörper ausgeführten Stutzen 7 hineinragt. Eine Abscherung des Scherkörpers 10 ermöglicht dabei sowohl eine axiale Verschiebung als auch eine Drehbeweglichkeit des Mantelrohres 6 und des Stutzens 7 gegeneinander. Zur Montage des Scherkörpers 10 kann dieser durch seine hohe axiale Belastbarkeit unmittelbar durch die Wandung des Stutzens 7 und des Mantelrohres 6 hindurchgetrieben werden, ohne zuvor eine entsprechende Ausnehmung in Stutzen 7 und/oder Mantelrohr 6 vorsehen zu müssen.

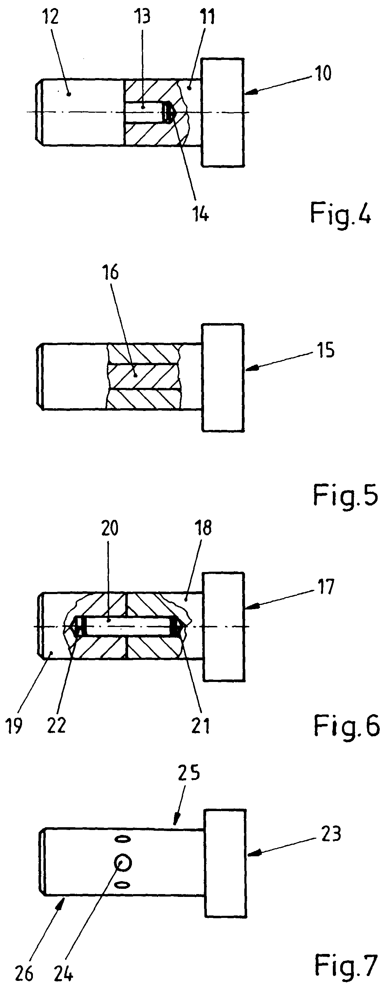

Figur 4 zeigt den Scherkörper 10 in einer vergrößerten und teilweise geschnittenen Seitenansicht. Zu erkennen ist die zweiteilige Ausführung des Scherkörpers 10, wobei der zweite Abschnitt 12 einen Vorsprung 13 aufweist, welcher mittels einer Presspassung in eine entsprechende Ausnehmung 14 des ersten Abschnitts 11 eingesetzt ist. Eine quer zur Längsachse des Scherkörpers 10 wirkende Scherspannung wird daher ausschließlich auf den Vorsprung 13 übertragen. Die Querschnittsfläche des Vorsprungs 13 kann an verschiedene Anwendungszwecke problemlos angepasst werden. Dabei beeinflusst die Gestaltung des Vorsprunges 13 die axiale Belastbarkeit des Scherkörpers 10 nur unwesentlich. Die äußeren Abmessungen des Scherkörpers 10 können daher beispielsweise auf die gewünschten Fertigungsverfahren oder konstruktiven Anforderungen optimal abgestimmt werden und insbesondere auch derart ausgelegt sein, dass der Scherkörper 10 mit großer Kraft durch den Stutzen 7 und das Mantelrohr 6 hindurchgetrieben werden kann.

Eine demgegenüber abgewandelte Ausführungsform eines Scherkörpers 15 zeigt Figur 5 in einer teilweise geschnittenen Seitenansicht. Hierbei hat der Scherkörper 15 einen Kern 16, der in dem dargestellten, zunächst noch nicht in eine Lenkspindel eingesetzten Zustand, spaltfrei über die volle Länge des Scherkörpers 15 in diesen eingesetzt ist. Nach dem Abschluss des Herstellungsprozesses kann der Kern 16 aus dem Scherkörper 15 entfernt werden, so dass die Scherfläche lediglich durch den verbleibenden Randbereich des Scherkörpers 15 gebildet ist. Dabei sind auch andere Ausführungen möglich, bei denen der Kern 16 als Teil eines nicht dargestellten Werkzeuges ausgeführt ist und somit lediglich während des Montageprozesses in den Scherkörper 15 eingesetzt und anschließend wiederverwendet werden kann. Der Kern 16 kann ferner auch ein zunächst mit dem Scherkörper 15 einteilig verbundener Abschnitt sein, der beispielsweise nach dem Einsetzen in eine Lenkspindel durch Bohren oder andere spanende Fertigungsverfahren entfernt wird.

In Figur 6 ist eine zweiteilige Ausführungsform eines Scherkörpers 17 gezeigt, dessen zwei Abschnitte 18 und 19 mittels eines die Scherfläche bestimmenden Scherstiftes 20 verbunden sind. Hierzu haben die beiden Abschnitte 18, 19 jeweils eine Ausnehmung 21, 22, in die der Scherstift 20 mit einer Presspassung eingesetzt ist. Bei dieser Ausführungsform lässt sich in einfacher Weise durch Auswahl eines geeigneten Scherstiftes 20 mit den gewünschten Materialeigenschaften die maximal zulässige Scherspannung bestimmen. Der Scherstift 20 kann hierzu beispielsweise auch in die Ausnehmungen 18, 19 eingeschraubt sein.

Eine einfache Ausführung eines Scherkörpers 23 zeigt Figur 7. Hierbei weist der einteilige Scherkörper 23 mehrere, als Bohrungen ausgeführte Ausnehmungen 24 auf, die somit für eine quer zur Längsachse des Scherkörpers 23 angreifende Kraft eine Sollbruchstelle bilden, deren die zulässige Scherspannung bestimmende Scherfläche durch die verbleibende Querschnittsfläche bestimmt ist. Hierzu ist in einem montierten Zustand ein erster Abschnitt 25 in ein nicht dargestelltes Mantelrohr und ein zweiter Abschnitt 26 in einen nicht dargestellten Stutzen eingesetzt. Die Ausnehmungen 24 können dadurch problemlos an den jeweiligen Verwendungszweck angepasst werden.

## Patentansprüche

1. Teleskopierbare Lenkspindel, insbesondere für ein Kraftfahrzeug, mit einem äußeren Mantelrohr und mit einem Stutzen, wobei das Mantelrohr und der Stutzen mittels eines Deformationskörpers verbunden sind, **dadurch gekennzeichnet,** dass der Deformationskörper einen Scherkörper (10, 15, 17, 23) aufweist, der eine von seiner Querschnittsfläche abweichende Scherfläche aufweist.

2. Lenkspindel nach Anspruch 1, **dadurch gekennzeichnet,** dass der Scherkörper (10, 15, 17, 23) in seiner eingebauten Position im Bereich zwischen dem Mantelrohr (6) und dem Stutzen (7) eine gegenüber der übrigen Querschnittsfläche verkleinerte Scherfläche aufweist.

3. Lenkspindel nach Anspruch 1 oder 2, **dadurch gekennzeichnet,** dass der Scherkörper (17) zwei miteinander formschlüssig verbundene Abschnitte (18, 19) aufweist, die mittels eines die Scherfläche bestimmenden Scherstiftes (20) verbunden sind.

4. Lenkspindel nach einem der vorhergehenden Ansprüche, **dadurch gekennzeichnet,** dass der Scherstift (20) eine Presspassung aufweist.

5. Lenkspindel nach einem der vorhergehenden Ansprüche, **dadurch gekennzeichnet,** dass der Scherkörper (10) einen mit einem Vorsprung (13) versehenen ersten Abschnitt (12) aufweist, welcher in eine entsprechende Ausnehmung (14) eines zweiten Abschnitts (11) eingesetzt ist.

6. Lenkspindel nach einem der vorhergehenden Ansprüche, **dadurch gekennzeichnet,** dass der Scherkörper (15) einen nach dem Einsetzen des Scherkörpers (15) in die Lenkspindel (1) entfernbaren Kern (16) aufweist.

7. Lenkspindel nach einem der vorhergehenden Ansprüche, **dadurch gekennzeichnet,** dass der Scherkörper (23) zumindest eine die Querschnittsfläche auf das Maß der Scherfläche verringernde Ausnehmung (24) aufweist.

8. Lenkspindel nach einem der vorhergehenden Ansprüche, **dadurch gekennzeichnet,** dass der Scherkörper (10, 15, 17, 23) eine im wesentlichen kreisförmige Querschnittsfläche aufweist.

9. Lenkspindel nach einem der vorhergehenden Ansprüche, **dadurch gekennzeichnet,** dass die Lenkspindel (1) mehrere, über den Umfang in etwa gleichmäßig verteilte Scherkörper (10, 15, 17, 23) aufweist.

10. Lenkspindel nach einem der vorhergehenden Ansprüche, **dadurch gekennzeichnet,** dass der Scherkörper (10, 15, 17, 23) aus Stahl hergestellt ist.

11. Lenkspindel nach einem der vorhergehenden Ansprüche, **dadurch gekennzeichnet,** dass das äußere Mantelrohr (6) und der Stutzen (7) lediglich mittels des Scherkörpers (10, 15, 17, 23) drehfest verbunden sind.
